# EUROPÄISCHE PATENTSCHRIFT

(11) **EP 3 131 794 B1**
(45) Veröffentlichungstag und Bekanntmachung des Hinweises auf die Patenterteilung: **06.06.2018**
(21) Anmeldenummer: 15705615.1
(22) Anmeldetag: 20.02.2015
(51) Int. Cl.: B60S 1/04

(54) **WISCHERANLAGE**
WIPER SYSTEM
ENSEMBLE ESSUIE-GLACE

(43) Veröffentlichungstag der Anmeldung: 22.02.2017
(73) Patentinhaber: Robert Bosch GmbH, 70442 Stuttgart (DE)
(72) Erfinder: HAWIGHORST, Achim, 77830 Buehlertal (DE); VAN DE ROVAART, Robert-Jan, 77833 Ottersweier (DE); BIANK, Andreas, 67160 Oberlauterbach (DE); KRAUS, Achim, 11070 Belgrade (DE); METZ, Ulrich, 77855 Achern (DE); MILENKOVIC, Branislav, Belgrad 11000 (RS)
(86) Internationale Anmeldenummer: PCT/EP2015/053596
(87) Internationale Veröffentlichungsnummer: WO 2015/158452

(56) Entgegenhaltungen:
- DE-A1- 10 261 926
- DE-A1-102009 043 116

## Beschreibung

Die Erfindung betrifft eine Wischeranlage gemäß Patentanspruch 1 und ein Verfahren zum Montieren einer Wischeranlage gemäß Anspruch 11.

### Stand der Technik

Aus DE 102 61 926 A1 ist eine Antriebsanordnung einer Wischvorrichtung für Scheiben eines Kraftfahrzeugen bekannt. Die Antriebsanordnung weist zwei Wischerlager auf, in denen Antriebswellen für Wischer gelagert sind, wobei die zwei Wischerlager nur über eine Koppelstange miteinander verbunden sind. Die Koppelstange ist drehfest mit den Antriebswellen der Wischerlager verbunden. Die Wischerlager ohne Konsole weisen den Vorteil auf, dass sie kostengünstiger herzustellen sind, leichter sind und weniger Bauraum beanspruchen, da keine Konsole vorhanden ist.

Weiterhin gibt es Wischeranlagen, bei denen die Wischerlager über eine Konsole fest miteinander verbunden sind. Diese Wischerlager weisen den Vorteil auf, dass eine präzise Montage der Wischerlager an der Karosserie des Fahrzeuges auf einfache Weise möglich ist.

Dokument DE 10 2009 043 116 A offenbart eine Wischeranlage gemäß dem ersten Teil des Anspruchs 1.

### Offenbarung der Erfindung

Die Aufgabe der Erfindung besteht darin, eine kostengünstige Wischeranlage bereitzustellen, die präzise an der Karosserie eines Fahrzeuges montiert werden kann.

Die Aufgabe der Erfindung wird durch die Wischeranlage gemäß Patentanspruch 1 und durch das Verfahren zum Montieren einer Wischeranlage gemäß Patentanspruch 11 gelöst.

Weitere vorteilhafte Ausführungsformen der Wischeranlage sind in den abhängigen Ansprüchen angegeben.

Ein Vorteil der Wischeranlage besteht darin, dass die Wischeranlage kostengünstig herzustellen ist, leicht ist, wenig Bauraum beansprucht und trotzdem die zwei Wischerlager in einer definierten Position zueinander stehen und somit in einer präzisen Ausrichtung zueinander auf einfache Weise an einer Karosserie eines Fahrzeuges montiert werden können. Dies wird dadurch erreicht, dass Haltemittel vorgesehen sind, die die Koppelstange jeweils in festgelegte Positionen zu den zwei Wischerlagern halten. Nach der Montage der Wischerlager können die Haltemittel gelöst werden, sodass die Antriebswellen über die Koppelstange bewegbar sind.

Die Haltemittel sind gegenüber einer aus dem Stand der Technik bekannten Konsole, die die Wischerlager verbindet, deutlich günstiger in der Herstellung. Zudem benötigen die Haltemittel weniger Bauraum im Fahrzeug. Weiterhin sind die Haltemittel leichter als die Konsole, sodass eine Gewichtsersparnis bei der Wischeranlage erreicht wird.

In einer Ausführungsform sind das erste und/oder das zweite Haltemittel in der Weise ausgebildet, dass eine kraft- und/oder formschlüssige Verbindung zwischen dem ersten Wischerlager und der Koppelstange und/oder zwischen dem zweiten Wischerlager und der Koppelstange hergestellt wird. Eine kraft- und/oder formschlüssige Verbindung eignet sich gut, um die Koppelstange in einer festgelegten Position zu dem jeweiligen Wischerlager zu halten. Zudem kann eine kraft- und/oder formschlüssige Verbindung nach der Montage leicht gelöst werden, sodass die Koppelstange frei beweglich gegenüber den Wischerlagern ist.

In einer weiteren Ausführungsform weist das erste und/oder das zweite Haltemittel eine Sollbruchstelle auf. Mithilfe der Sollbruchstelle kann die Verbindung zwischen der Koppelstange und den Wischerlagern nach der Montage der Wischeranlage an der Karosserie gelöst werden, indem das Haltemittel abgebrochen wird. Die Verwendung der Sollbruchstelle bietet den Vorteil, dass das Haltemittel robust ausgebildet werden kann und eine feste Halterung der Koppelstange in Bezug auf das Wischerlager möglich ist. Dadurch wird eine sehr präzise Festlegung der Koppelstange in Bezug auf das Wischerlager ermöglicht. Zudem kann das Haltemittel einfach und kostengünstig hergestellt werden. Nach der Montage kann z.B. der Monteur das erste und/oder das zweite Haltemittel an der Sollbruchstelle brechen und somit die Bewegung der Koppelstange freigeben.

In einer weiteren Ausführungsform sind das erste und/oder das zweite Haltemittel in der Weise ausgebildet, dass die Koppelstange in der Montageposition außerhalb eines Betriebsbereiches der Koppelstange während des normalen Betriebes der Wischeranlage liegt. Somit ist es nach dem Lösen des Haltemittels nicht erforderlich, die Haltemittel zu entfernen. Es reicht aus, wenn die Koppelstange in den normalen Betriebsbereich bewegt wird. Abhängig von der gewählten Ausführungsform kann dies manuell durch einen Monteur oder durch einen Motor der Wischeranlage erfolgen.

In einer weiteren Ausführungsform sind das erste und/oder das zweite Haltemittel fest mit dem ersten bzw. mit dem zweiten Wischerlager verbunden. Vorzugsweise können das erste Wischerlager und das erste Haltemittel und/oder das zweite Wischerlager und das zweite Haltemittel einteilig ausgebildet sein. Die einteilige Ausbildung bietet eine präzise Ausrichtung der Wischerlager zueinander. Die feste Verbindung zwischen den Haltemitteln und den Wischerlagern bietet den Vorteil, dass mehr Platz zur Ausbildung des Haltemittels am Wischerlager zur Verfügung steht als an der Koppelstange.

In einer weiteren Ausführungsform sind das erste und/oder das zweite Haltemittel über eine lösbare kraft- und/oder formschlüssige Verbindung mit der Koppelstange verbunden. Dies bietet den Vorteil, dass die Koppelstange nach dem Lösen des Haltemittels frei von Teilen des Haltemittels ist und somit weder in der Bewegung noch durch ein erhöhtes Gewicht durch Teile des Haltemittels beeinträchtigt wird. Somit ist ein energiearmes Bewegen der Koppelstange im betreib der Wischeranlage möglich. Das Zusatzgewicht, das durch die Haltemittel am Wischerlager erzeugt wird, muss nicht bewegt werden und kostet somit keinen Strom beim Betrieb der Wischeranlage.

In einer weiteren Ausführungsform weist das erste und/oder das zweite Haltemittel ein Rastelement auf, mit dem das Haltemittel mit der Koppelstange und/oder mit dem ersten Wischerlager bzw. mit dem zweiten Wischerlager verrastet. Die Verwendung eines Rastelementes bietet eine einfache und kostengünstige Ausbildung des Haltemittels und zudem eine einfache und relativ präzise Befestigung des Halteelementes an der Koppelstange und/oder am ersten bzw. am zweiten Wischerlager. Zudem kann das Rastelement mit relativ geringen Kräften von der Koppelstange und/oder vom ersten bzw. dem zweiten Wischerlager gelöst werden.

In einer weiteren Ausführungsform ist die kraftschlüssige Verbindung zwischen der Koppelstange und/oder dem ersten bzw. dem zweiten Wischerlager mithilfe des ersten bzw. zweiten Haltemittels in Form einer kraftschlüssigen Verbindung ausgeführt. Beispielsweise kann als Kraft eine magnetische Kraft, eine elektromagnetische Kraft, eine elektrostatische Kraft und/oder eine Klebekraft in Form einer Klebeschicht verwendet werden. Die beschriebenen Kräfte eignen sich, um für die Montage der Wischeranlage die gewünschte festgelegte Position der Koppelstange und der Wischerlager zueinander bereitzustellen, und um nach der Montage die Koppelstange von der festgelegten Position zu lösen. Für die Ausbildung der elektromagnetischen, der magnetischen und/oder der elektrostatischen Kraft sind die Haltemittel und die Koppelstange und die Wischerlager mit entsprechenden Materialien bzw. Schichten oder Vorrichtungen versehen.

In einer weiteren Ausführungsform ist die kraft- und/oder formschlüssige Verbindung in der Weise ausgebildet, dass die Verbindung durch eine Betätigung eines Motors der Wischeranlage, der die Antriebswellen antreibt, von der Montageposition gelöst wird und vorzugsweise in eine Betriebsposition bewegt wird.

In einer weiteren Ausführungsform sind das erste Haltemittel und/oder das zweite Haltemittel am ersten Wischerlager bzw. am zweiten Wischerlager befestigt. Zudem weisen das erste und/oder das zweite Haltemittel ein Rastelement auf, das in einer Montageposition die Koppelstange in den vorgegebenen Positionen relativ zu den Wischerlagern festhält. Auf diese Weise wird eine einfache und kostengünstige Ausbildung der Haltemittel ermöglicht.

Das vorgeschlagene Verfahren weist den Vorteil auf, dass die kostengünstige Wischeranlage präzise an der Karosserie eines Fahrzeuges mit einer gewünschten Position der Wischerlager zueinander montiert werden kann und anschließend ein normaler Betrieb der Wischerlager ohne Beeinträchtigung möglich ist. Dies wird dadurch erreicht, dass nach der Montage der Wischeranlage die Koppelstange von der festgelegten Position durch Lösen der Haltemittel befreit wird und somit für einen normalen Betrieb der Wischeranlage zur Verfügung steht.

In einer weiteren Ausführungsform wird die Koppelstange von den Haltemitteln gelöst und die Koppelstange wird in eine Betriebsposition bewegt. Dies ist dann von Vorteil, wenn sich die Position der Koppelstange in der Montageposition außerhalb des Betriebsbereiches für einen Betrieb der Wischeranlage befindet. Durch die Bewegung der Koppelstange in die Betriebsposition wird erreicht, dass die verbleibenden Haltemittel den normalen Betrieb der Koppelstange nicht beeinträchtigen und somit nicht entfernt werden müssen.

In einer weiteren Ausführungsform wird die Koppelstange mithilfe eines Motors der Wischeranlage von den Haltemitteln gelöst, indem die Wischeranlage eine Antriebswelle und damit die Koppelstange bewegt. Dazu ist ein entsprechendes Programm in einem Steuergerät zum Ansteuern des Motors der Wischeranlage abgelegt. Somit ist es nicht erforderlich, dass ein Monteur nach der Montage der Wischeranlage die Koppelstange von der Verbindung mit den Haltemitteln löst.

Die Erfindung wird im Folgenden anhand der Figuren näher erläutert. Es zeigen
Fig. 1 eine erste Ausführungsform einer Wischeranlage in einer Montageposition,
Fig. 2 die erste Ausführungsform der Wischeranlage in einem Betriebsbereich,
Fig. 3 eine zweite Ansicht der Fig. 1,
Fig. 4 eine zweite Ansicht der Wischeranlage im Betriebsbereich,
Fig. 5 ein Haltemittel, das lösbar am Wischerlager befestigt ist,
Fig.6 ein mit der Koppelstande und dem Wischerlager einteilig ausgebildetes Haltemittel mit Sollbruchstelle,
Fig. 7 ein Haltemittel, das mit einer Klebeschicht mit der Koppelstange verbunden ist,
Fig. 8 ein Haltemittel, das über eine Klebeschicht mit dem Wischerlager verbunden ist,
Fig. 9 ein Haltemittel, das kraftschlüssig mit der Koppelstange verbunden ist,
Fig. 10 ein Haltemittel, das kraftschlüssig mit dem Wischerlager verbunden ist,
Fig. 11 ein Haltemittel, das formschlüssig mit der Koppelstange verbunden ist, und
Fig. 12 ein Haltemittel, das kraftschlüssig mit einem Wischerlager verbunden ist.

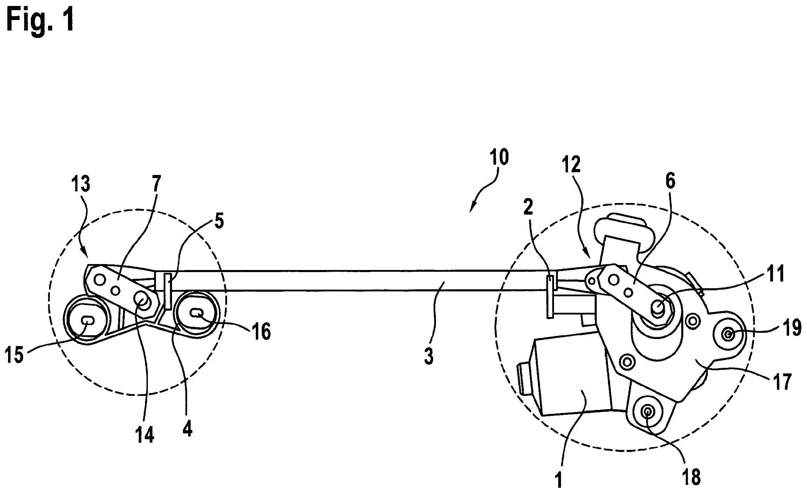

Fig. 1 zeigt in einer perspektivischen Darstellung eine Wischeranlage 10, die ein Wischermotor 1 aufweist, der eine erste Antriebswelle 11 für einen nicht dargestellten Wischarm direkt oder über ein Getriebe antreibt. Die erste Antriebswelle 11 ist drehfest mit dem nicht dargestellten ersten Wischarm verbunden. Zudem ist die erste Antriebswelle 11 drehfest mit einer Kurbel 6 verbunden, die mit einem zweiten Ende über ein erstes Gelenk 12 mit einer Koppelstange 3 verbunden ist. Die Koppelstange 3 ist an einem zweiten Ende über ein zweites Gelenk 13 mit einer Lagerplatte 7 verbunden. Das erste und das zweite Gelenk 12, 13 sind als Drehgelenke ausgebildet. Die Lagerplatte 7 ist mit einem zweiten Ende drehfest mit einer zweiten Antriebswelle 14 verbunden. Die zweite Antriebswelle 14 steht drehfest mit einem nicht dargestellten zweiten Wischarm in Verbindung. Die Wischarme sind dafür vorgesehen, um eine Scheibe eines Kraftfahrzeuges zu wischen. Die zweite Antriebswelle 14 ist in einem zweiten Wischerlager 4 drehbar gelagert. Das zweite Wischerlager 4 weist zwei Befestigungsmittel 15, 16 auf, mit denen das zweite Wischerlager 4 an zwei festgelegten Punkten der Karosserie befestigt werden kann. Zudem weist das zweite Wischerlager 4 ein zweites Haltemittel 5 auf, mit dem die Koppelstange 3 in einer zweiten festgelegten Position relativ zum zweiten Wischerlager 4 gehalten wird.

Das Wischermotormodul 1 weist ein erstes Wischerlager 17 auf, das ein drittes und ein viertes Befestigungsmittel 18, 19 aufweist, mit dem das erste Wischerlager 17 an einer festgelegten Position der Karosserie befestigt werden kann. Weiterhin weist das erste Wischerlager 17 ein erstes Haltemittel 2 auf, mit dem die Koppelstange 3 in einer festgelegten ersten Position relativ zum ersten Wischerlager 17 gehalten wird. Fig. 1 zeigt die Wischeranlage 10 in einer Montagestellung, in der die Positionen des ersten und des zweiten Wischerlagers 17, 4 über die Verbindung der Haltemittel 2, 5 mit der Koppelstange 3 präzise zueinander festgelegt sind. Damit können das erste und das zweite Wischerlager 17, 4 mithilfe der Befestigungsmittel 15, 16, 18, 19 in einer festgelegten Position zueinander an der Karosserie des Fahrzeuges ohne großen Aufwand befestigt werden.

Die Befestigungsmittel 15, 16, 18, 19 sind in dem dargestellten Ausführungsbeispiel in Form von Löchern ausgebildet, die über Schraubverbindungen mit der Karosserie des Fahrzeuges fixiert werden können. Abhängig von der gewählten Ausführungsform kann wenigstens eines oder mehrere der Befestigungsmittel 15, 16, 18, 19 in Form eines Rast- oder Arretierungsmittels ausgebildet sein, das in eine entsprechende Ausnehmung der Karosserie eingesteckt und verrastet wird. Zudem können auch Rastmittel an der Karosserie des Fahrzeuges ausgebildet sein, die in entsprechende Löcher 15, 16, 19, 18 der Wischerlager 17,4 einrasten und dadurch die Wischeranlage 10 an der Karosserie des Fahrzeuges befestigen.

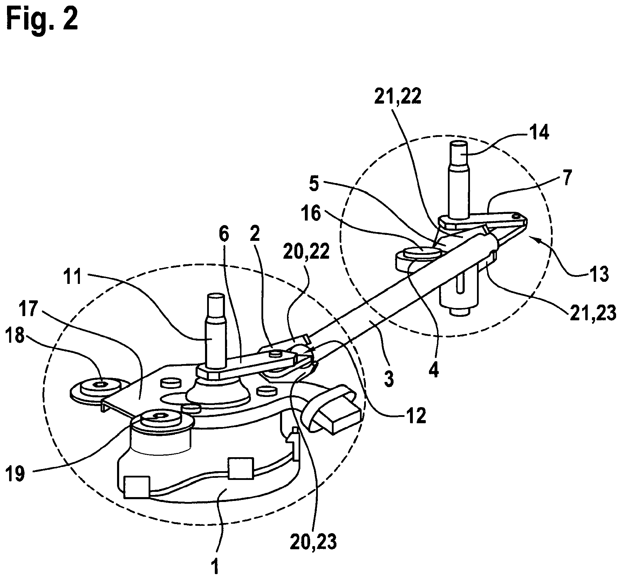

Fig. 2 zeigt eine zweite Ansicht der Wischeranlage 10 in der Montagestellung. In dem dargestellten Ausführungsbeispiel sind die Haltemittel 2, 5 an einem Ende fest mit dem entsprechenden Wischerlager 17, 4 verbunden und weisen an einem zweiten Ende ein Rastelement 20, 21 auf. Die Rastelemente 20, 21 sind in Form von zwei Armen 22, 23 ausgebildet, die in der Montagestellung die Koppelstange 3 an gegenüberliegenden Seiten festhalten. Beispielsweise kann die Koppelstange 3 einen kreisförmigen Querschnitt aufweisen. Entsprechend sind Innenseiten der Arme 22, 23 ebenfalls kreisförmig ausgebildet und die zwei Arme 22,23 übergreifen mehr als einen Halbkreis des Querschnittes der Koppelstange 3. Abhängig von der gewählten Ausführung können die Rastelemente 20,21 auch andere Formen aufweisen.

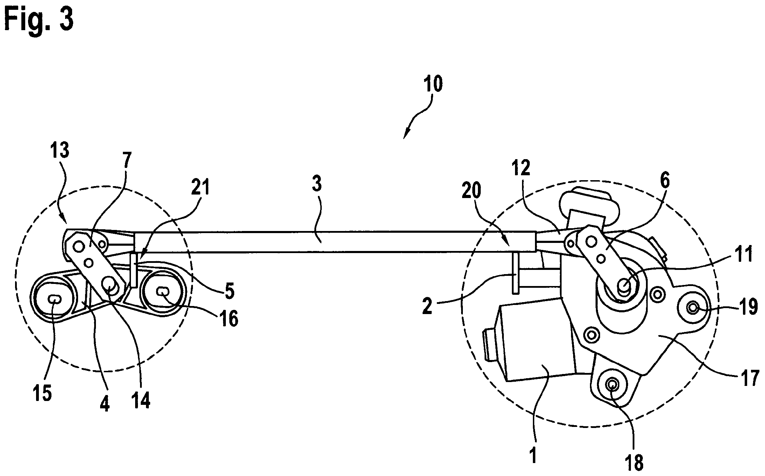

Zum Lösen wird die Koppelstange 3 aus den zwei Rastelementen 20, 21 herausgezogen, wie in Fig. 3 dargestellt ist. Die Koppelstange 3 befindet sich nun in einer Parkstellung, d.h. am Beginn eines Betriebsbereiches. Das Herausziehen der Koppelstange aus den Rastelementen 20, 21 kann von einem Monteur nach der Montage der Wischeranlage an der Karosserie per Hand durchgeführt werden oder selbstständig von dem Wischermotor 1 ausgeführt werden. Dazu wird der Wischermotor 1 von einem Steuergerät in entsprechender Weise angesteuert.

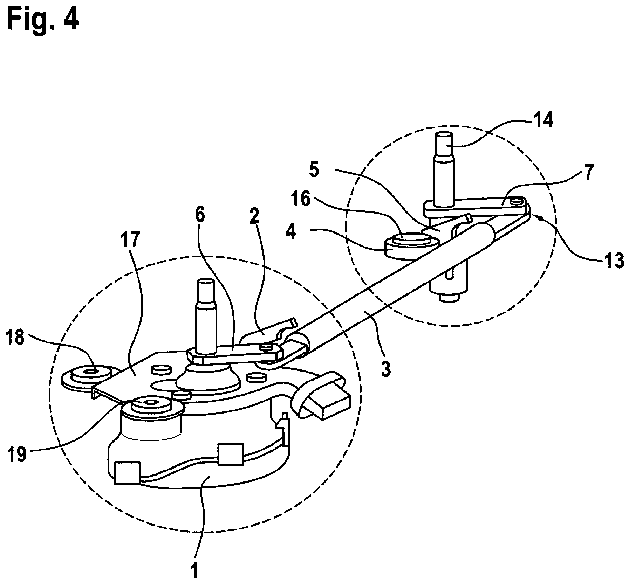

Fig. 4 zeigt die Wischeranlage 10 der Fig. 3 in einer zweiten Ansicht. d.h. gelöst von den Haltemitteln 2, 5.

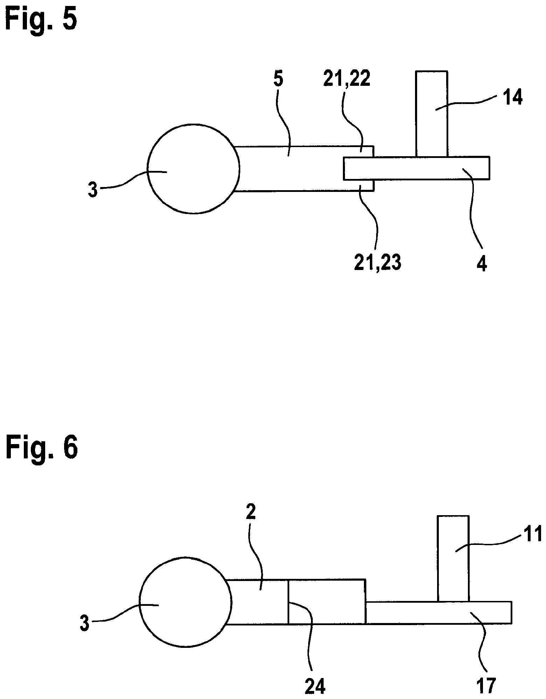

Fig. 5 zeigt eine weitere Ausführungsform, bei der das zweite Haltemittel 5 an der Koppelstange 3 befestigt ist und ein zweites Rastelement 21 aufweist. Die Koppelstange 3 ist nur im Querschnitt dargestellt. Das zweite Rastelement 21 ist ebenfalls in Form von zwei Armen 22, 23 ausgebildet, die das zweite Wischerlager 4 umgreifen und festhalten. Entsprechend kann die Koppelstange 3 auch ein erstes Haltemittel 2 aufweisen, das über ein erstes Rastelement 20 mit zwei Armen 22,23 verfügt und an dem ersten Wischerlager 17 verrastet ist.

Fig. 6 zeigt eine weitere Ausführungsform, bei der das erste Haltemittel 2 mit der Koppelstange 3 und dem ersten Wischerlager 17 verbunden ist. Das erste Haltemittel 2 weist in dieser Ausführungsform eine Sollbruchstelle 24 auf. Nach der Montage wird zum Lösen der Koppelstange 3 von dem ersten Wischerlager 17 das erste Haltemittel 2 an der Sollbruchstelle 24 durchbrochen. Beispielsweise kann die Sollbruchstelle 24 die Form eines steifen Stegstreifens ausgebildet sein. Abhängig von der gewählten Ausführungsform kann das erste Haltemittel 2 einteilig mit der Koppelstange 3 oder mit dem ersten Wischerlager 17 ausgebildet sein. In entsprechender Weise kann auch das zweite Wischerlager 4 über ein analog ausgebildetes zweites Haltemittel 5, das ebenfalls eine Sollbruchstelle 24 aufweist, mit der Koppelstange 3 verbunden sein.

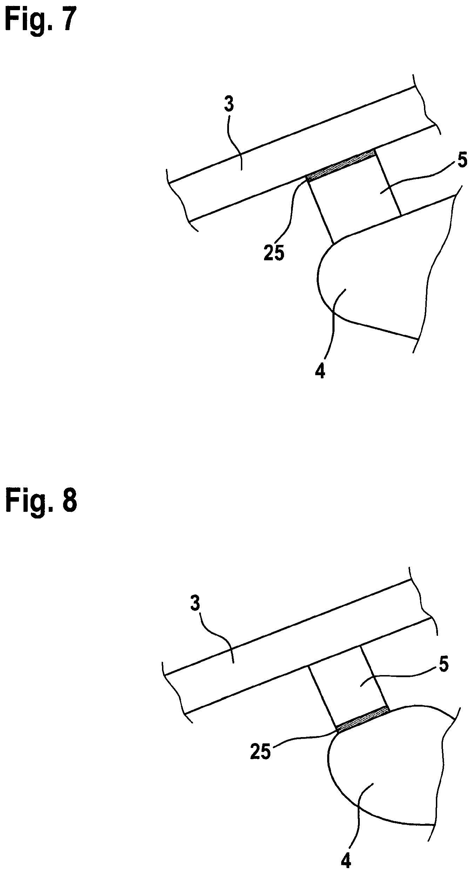

Fig. 7 zeigt eine weitere Ausführungsform, bei der die Koppelstange 3 über eine Klebeschicht 25 mit dem zweiten Haltemittel 5 verbunden ist, das am zweiten Wischerlager 4 befestigt ist. Die Haftkraft der Klebeschicht 25 kann in der Weise ausgebildet sein, dass ein Monteur oder der Wischermotor die Koppelstange 3 von dem zweiten Wischerlager 4 durch Aufbrechen der Klebeschicht 25 lösen kann. In entsprechender Weise kann auch das erste Haltemittel 2 über eine Klebeschicht 25 mit der Koppelstange 3 verbunden sein, wobei das erste Haltemittel 2 an dem ersten Wischerlager 17 befestigt ist.

Fig. 8 zeigt eine weitere Ausbildungsform, bei der die Koppelstange 3 mit einem zweiten Haltemittel 5 verbunden ist, und das zweite Haltemittel 5 über eine Klebeschicht 25 am zweiten Wischerlager 4 befestigt ist. Die Klebeschicht 25 ist entsprechend ausgebildet, dass ein Monteur oder der Motor die Klebeschicht 25 aufbrechen kann. Entsprechend kann auch das erste Haltemittel 2 über eine entsprechende Klebeschicht 25 mit der Koppelstange 3 lösbar verbunden sein, wobei das erste Haltemittel 2 fest mit dem ersten Wischerlager 17 verbunden ist.

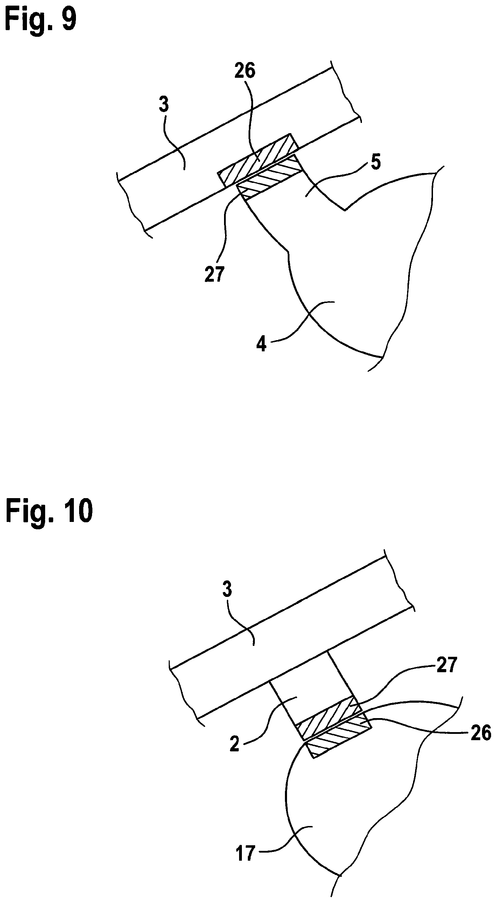

Fig. 9 zeigt eine weitere Ausführungsform, bei der das zweite Haltemittel 5 am zweiten Wischerlager 4 befestigt ist und über eine elektromagnetische und/oder magnetische und/oder elektrostatische Kraft mit der Koppelstange 3 verbunden ist. Dazu weist die Koppelstange 3 eine erste Schicht 26 und das zweite Haltemittel 5 eine zweite Schicht 27 auf. Die erste und die zweite Schicht 26, 27 grenzen in der dargestellten Montagestellung aneinander an und sind in der Weise ausgebildet, dass eine magnetische Kraft oder eine elektrostatische Kraft zwischen der Koppelstange 3 und dem zweiten Haltemittel 5 erzeugt werden kann. Weiterhin können die erste und/oder die zweite Schicht 26, 27 auch in Form von Spulen ausgebildet sein, die bei einer entsprechenden Bestromung eine elektromagnetische Kraft zwischen der Koppelstange 3 und dem zweiten Haltemittel 5 erzeugen. In entsprechender Weise kann auch das erste Haltemittel 2 und die Koppelstange 3 im Bereich des ersten Haltemittels 2 eine entsprechende erste bzw. zweite Schicht 26, 27 aufweisen und über eine magnetische oder elektrostatische Kraft oder eine elektromagnetische Kraft die Koppelstange 3 an dem ersten Haltemittel 2 gehalten werden. In analoger Weise kann auch das erste oder zweite Haltemittel 2, 5 an der Koppelstange 3 befestigt sein und über eine entsprechende Schichtanordnung mit dem entsprechenden Wischerlager 17, 4 verbunden sein, wie schematisch für das erste Haltemittel 2 und das erste Wischerlager 17 in Fig. 10 dargestellt.

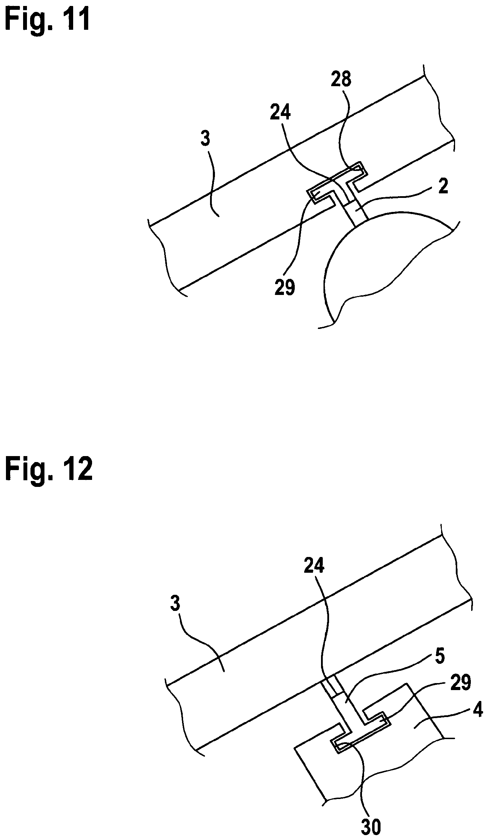

Fig. 11 zeigt eine weitere Ausführungsform, bei der die Koppelstange 3 eine Rastausnehmung 28 aufweist, in die ein erstes Haltemittel 2 mit einem weiteren Rastelement 29 eingreift. Das Rastelement 29 ist in der dargestellten Ausführungsform als Querbalken ausgebildet, der an einem freien Ende des ersten Haltemittels 2 quer zur Längsrichtung des ersten Haltemittels 2 angeordnet ist. Das weitere Rastelement 29 kann beispielsweise flexibel ausgebildet sein, sodass bei Aufbringen einer ausreichenden Kraft auf die Koppelstange 3 das weitere Rastelement 29 aus der Rastausnehmung 38 herausgezogen werden kann. Zudem kann das erste Haltemittel 2 auch eine Sollbruchstelle 24 aufweisen, die bei einer ausreichend hohen Kraft auf die Koppelstange 3 aufbricht. Weiterhin kann auch die Rastausnehmung 28 mit flexiblen Wänden begrenzt sein, die bei einer ausreichend großen Kraft nachgeben und das weitere Rastelement 29 freigeben. In analoger Weise kann auch das zweite Haltemittel 5 entsprechend mit einem weiteren Rastelement 29 ausgebildet sein und mit der Koppelstange 3 verbunden sein.

Fig. 12 zeigt eine weitere Ausführungsform, bei der das zweite Wischerlager 4 eine zweite Rastausnehmung 30 aufweist. Die Koppelstange 3 ist mit einem zweiten Haltemittel 5 verbunden, das an einem freien Ende ein weiteres Rastelement 29 aufweist, wobei das weitere Rastelement 29 in der zweiten Rastausnehmung 30 angeordnet ist. Das weitere Rastelement 29 kann entsprechend flexibel ausgebildet sein, dass bei einer ausreichend hohen Kraft auf die Koppelstange 3 das weitere Rastelement 29 aus der zweiten Rastausnehmung 30 herausgezogen wird. Zudem kann das zweite Haltemittel 5 eine Sollbruchstelle 24 aufweisen, die bei einer ausreichend hohen Kraft auf die Koppelstange 3 aufbricht. Weiterhin kann auch die Rastausnehmung 28 mit flexiblen Wänden begrenzt sein, die bei einer ausreichend großen Kraft nachgeben und das weitere Rastelement 29 freigeben. In analoger Weise kann auch das erste Haltemittel 2 ausgebildet sein und mit der Koppelstange 3 befestigt sein und in eine zweite Rastausnehmung 30 des ersten Wischerlagers 17 mit einem weiteren Rastelement 29 hineinragen. Ebenso kann das erste Haltemittel 2 eine entsprechende Sollbruchstelle 24 aufweisen.

Abhängig von der gewählten Ausführungsform können die einzelnen Ausführungen der beschriebenen Figuren auch miteinander kombiniert werden.

## Patentansprüche

1. Wischeranlage (10) mit einem ersten Wischerlager (17) mit einer ersten Antriebswelle (11) für einen ersten Wischarm, mit einem zweiten Wischerlager (4) mit einer zweiten Antriebswelle (14) für einen zweiten Wischarm, wobei die erste und die zweite Antriebswelle (11, 14) über eine Koppelstange (3) drehfest miteinander verbunden sind, **dadurch gekennzeichnet, dass** ein erstes Haltemittel (2) zum Festhalten der Koppelstange (3) am ersten Wischerlager (17) in einer ersten festgelegten Position vorgesehen ist, wobei ein zweites Haltemittel (5) zum Festhalten der Koppelstange (3) am zweiten Wischerlager (4) in einer zweiten festgelegten Position vorgesehen ist.

2. Wischeranlage nach Anspruch 1, wobei das erste und/oder zweite Haltemittel (2, 5) eine kraft und/oder formschlüssige Verbindung zwischen dem ersten bzw. dem zweiten Wischerlager (17, 4) und der Koppelstange (3) herstellt.

3. Wischeranlage nach einem der vorhergehenden Ansprüche, wobei das erste und/oder das zweite Haltemittel (2, 5) eine Sollbruchstelle (24) aufweist.

4. Wischeranlage nach einem der vorhergehenden Ansprüche, wobei die erste und/oder zweite Position der Koppelstange (3) außerhalb eines Betriebsbereiches der Koppelstange (3) während eines Betriebes der Wischeranlage (10) liegt, so dass das erste und/oder zweite Haltemittel (2, 5) nach dem Lösen der Koppelstange (3) bei einem Betrieb der Wischeranlage (10) eine Bewegung der Koppelstange (3) nicht stört.

5. Wischeranlage nach einem der vorhergehenden Ansprüche, wobei das erste und/oder das zweite Haltemittel (2, 5) fest mit dem ersten bzw. dem zweiten Wischerlager (17, 4) in Verbindung stehen, insbesondere einteilig mit dem ersten bzw. dem zweiten Wischerlager (17, 4) ausgebildet sind.

6. Wischeranlage nach Anspruch 5, wobei das erste und/oder das zweite Haltemittel (2, 5) über eine lösbare kraft- und/oder formschlüssige (25, 26, 27) Verbindung mit der Koppelstange verbunden sind.

7. Wischeranlage nach einem der Ansprüche 2 bis 6, wobei das erste und/oder das zweite Haltemittel als Rastelement (20, 21, 29) ausgebildet sind, wobei das (20, 21, 29) Rastelement mit der Koppelstange (3) oder mit dem ersten bzw. dem zweiten Wischerlager (17, 4) verrastet.

8. Wischeranlage nach einem der Ansprüche 2 bis 6, wobei die kraftschlüssige Verbindung (25, 26, 27) als magnetische Kraft, als elektrostatische Kraft und/oder als Klebekraft in Form einer Klebeschicht (25) ausgebildet ist.

9. Wischeranlage nach einem der Ansprüche 2 bis 8, wobei kraft- und/oder formschlüssige Verbindung in der Weise ausgebildet ist, dass die Koppelstange durch Betätigen eines Wischermotors (1) der Wischeranlage (10) von den Wischerlagern (17, 4) gelöst werden kann.

10. Wischeranlage nach einem der Ansprüche, wobei das erste und zweite Haltemittel (2, 5) am ersten bzw. zweiten Wischerlager (17, 4) befestigt sind, und wobei die Haltemittel (2, 5) ein Rastelement (20, 21, 29) aufweisen, das die Koppelstange (3) am Wischerlager (4, 17) festhält.

11. Verfahren zum Montieren einer Wischeranlage gemäß einem der vorhergehenden Ansprüche, wobei die Wischerlager an der Karosserie eines Fahrzeuges befestigt werden, und wobei anschließend die Koppelstange von den Wischerlagern gelöst wird.

12. Verfahren nach Anspruch 11, wobei die Koppelstange nach dem Lösen von einer Montageposition in eine Betriebsposition bewegt wird.

13. Verfahren nach einem der Ansprüche 11 oder 12, wobei zum Lösen die Koppelstange von einem Wischermotor der Wischeranlage bewegt wird.

## Claims

1. Wiper system (10) having a first wiper bearing (17) with a first drive shaft (11) for a first wiper arm, having a second wiper bearing (4) with a second drive shaft (14) for a second wiper arm, the first and the second drive shaft (11, 14) being connected fixedly to one another so as to rotate together via a coupling rod (3), **characterized in that** a first retaining means (2) is provided for holding the coupling rod (3) fixedly on the first wiper bearing (17) in a first fixed position, a second retaining means (5) being provided for holding the coupling rod (3) fixedly on the second wiper bearing (4) in a second fixed position.

2. Wiper system according to Claim 1, the first and/or second retaining means (2, 5) establishing a non-positive and/or positively locking connection between the first or the second wiper bearing (17, 4) and the coupling rod (3).

3. Wiper system according to either of the preceding claims, the first and/or the second retaining means (2, 5) having a predetermined break point (24).

4. Wiper system according to one of the preceding claims, the first and/or second position of the coupling rod (3) lying outside an operating range of the coupling rod (3) during operation of the wiper system (10), with the result that the first and/or second retaining means (2, 5) do/does not disrupt a movement of the coupling rod (3) after the release of the coupling rod (3) during operation of the wiper system (10).

5. Wiper system according to one of the preceding claims, the first and/or the second retaining means (2, 5) being connected fixedly to the first or the second wiper bearing (17, 4), in particular being configured in one piece with the first or the second wiper bearing (17, 4).

6. Wiper system according to Claim 5, the first and/or the second retaining means (2, 5) being connected to the coupling rod via a releasable non-positive and/or positively locking (25, 26, 27) connection.

7. Wiper system according to one of Claims 2 to 6, the first and/or the second retaining means being configured as a latching element (20, 21, 29), the latching element (20, 21, 29) latching with the coupling rod (3) or with the first or the second wiper bearing (17, 4).

8. Wiper system according to one of Claims 2 to 6, the non-positive connection (25, 26, 27) being configured as a magnetic force, as an electrostatic force and/or as an adhesive force in the form of an adhesive layer (25).

9. Wiper system according to one of Claims 2 to 8, the non-positive and/or positively locking connection being configured in such a way that the coupling rod can be released from the wiper bearings (17, 4) by way of actuation of a wiper motor (1) of the wiper system (10) .

10. Wiper system according to one of the claims, the first and second retaining means (2, 5) being fastened to the first and second wiper bearing (17, 4), respectively, and the retaining means (2, 5) having a latching element (20, 21, 29) which holds the coupling rod (3) fixedly on the wiper bearing (4, 17).

11. Method for assembling a wiper system according to one of the preceding claims, the wiper bearings being fastened to a body of a vehicle, and the coupling rod subsequently being released from the wiper bearings.

12. Method according to Claim 11, the coupling rod being moved from an assembly position into an operating position after the release.

13. Method according to either of Claims 11 and 12, the coupling rod being moved by a wiper motor of the wiper system for the release.

## Revendications

1. Installation d'essuie-glace (10) comprenant un premier palier d'essuie-glace (17) avec un premier arbre d'entraînement (11) pour un premier bras d'essuie-glace, un deuxième palier d'essuie-glace (4) avec un deuxième arbre d'entraînement (14) pour un deuxième bras d'essuie-glace, le premier et le deuxième arbre d'entraînement (11, 14) étant connectés l'un à l'autre de manière solidaire en rotation par le biais d'une bielle (3), **caractérisée en ce qu'**il est prévu un premier moyen de retenue (2) pour la fixation de la bielle (3) au premier palier d'essuie-glace (17) dans une première position fixée, un deuxième moyen de retenue (5) étant prévu pour fixer la bielle (3) au deuxième palier d'essuie-glace (4) dans une deuxième position fixée.

2. Installation d'essuie-glace selon la revendication 1, dans laquelle le premier et/ou le deuxième moyen de retenue (2, 5) établissent une connexion par engagement par force et/ou par correspondance de formes entre le premier ou le deuxième palier d'essuie-glace (17, 4) et la bielle (3).

3. Installation d'essuie-glace selon l'une quelconque des revendications précédentes, dans laquelle le premier et/ou le deuxième moyen de retenue (2, 5) présentent une zone destinée à la rupture (24).

4. Installation d'essuie-glace selon l'une quelconque des revendications précédentes, dans laquelle la première et/ou la deuxième position de la bielle (3) sont situées à l'extérieur d'une zone de fonctionnement de la bielle (3) pendant un fonctionnement de l'installation d'essuie-glace (10), de telle sorte que le premier et/ou le deuxième moyen de retenue (2, 5), après la libération de la bielle (3), n'entravent pas un déplacement de la bielle (3) lors d'un fonctionnement de l'installation d'essuie-glace (10) .

5. Installation d'essuie-glace selon l'une quelconque des revendications précédentes, dans laquelle le premier et/ou lé deuxième moyen de retenue (2, 5) sont en liaison solidaire avec le premier ou le deuxième palier d'essuie-glace (17, 4), notamment sont réalisés d'une seule pièce avec le premier ou le deuxième palier d'essuie-glace (17, 4).

6. Installation d'essuie-glace selon la revendication 5, dans laquelle le premier et/ou le deuxième moyen de retenue (2, 5) sont connectés à la bielle par le biais d'une connexion desserrable par engagement par force et/ou par correspondance de formes (25, 26, 27).

7. Installation d'essuie-glace selon l'une quelconque des revendications 2 à 6, dans laquelle le premier et/ou le deuxième moyen de retenue sont réalisés sous forme d'élément d'encliquetage (20, 21, 29), l'élément d'encliquetage (20, 21, 29) s'encliquetant avec la bielle (3) ou avec le premier ou le deuxième palier d'essuie-glace (17, 4) .

8. Installation d'essuie-glace selon l'une quelconque des revendications 2 à 6, dans laquelle la liaison par engagement par force (25, 26, 27) est réalisée sous forme de force magnétique, de force électrostatique et/ou de force adhésive sous la forme d'une couche de colle (25).

9. Installation d'essuie-glace selon l'une quelconque des revendications 2 à 8, dans laquelle la liaison par engagement par force et/ou par correspondance de formes est réalisée de telle sorte que la bielle puisse être déconnectée des paliers d'essuie-glace (17, 4) par l'actionnement d'un moteur d'essuie-glace (1) de l'installation d'essuie-glace (10).

10. Installation d'essuie-glace selon l'une quelconque des revendications précédentes, dans laquelle le premier et le deuxième moyen de retenue (2, 5) sont fixés au premier, respectivement au deuxième palier d'essuie-glace (17, 4), et dans laquelle les moyens de retenue (2, 5) présentent un élément d'encliquetage (20, 21, 29) qui retient la bielle (3) sur le palier d'essuie-glace (4, 17).

11. Procédé de montage d'une installation d'essuie-glace selon l'une quelconque des revendications précédentes, dans lequel les paliers d'essuie-glace sont fixés à la carrosserie d'un véhicule et la bielle est ensuite déconnectée des paliers d'essuie-glace.

12. Procédé selon la revendication 11, dans lequel la bielle, après avoir été déconnectée, est déplacée d'une position de montage dans une position fonctionnelle.

13. Procédé selon l'une quelconque des revendications 11 ou 12, dans lequel, pour sa déconnexion, la bielle est déplacée par un moteur d'essuie-glace de l'installation d'essuie-glace.
